# EUROPEAN PATENT APPLICATION

(11) **EP 4 807 518 A1**
(43) Date of publication of application: **16.09.2026**
(21) Application number: 26163372.1
(22) Date of filing: 09.03.2026
(51) Int. Cl.: G06F 3/12

(54) **INFORMATION PROCESSING APPARATUS AND INFORMATION PROCESSING METHOD**

(30) Priority: 12.03.2025 JP 2025039164
(71) Applicant: Seiko Epson Corporation, Tokyo 160-8801 (JP)
(72) Inventor: INOUE, Masatsugu, Suwa-shi 392-8502 (JP)
(74) Representative: Lewis Silkin LLP

(57) **Abstract**

There is provided an information processing apparatus configured to execute a standard print program and a control program that extends the standard print program, in which, in response to an input from a user, by the control program, unique prohibition processing to resolve a prohibition state of print settings is executed based on unique prohibition information, when the unique prohibition processing is not executed, by the standard print program, request processing is executed to transmit the print settings to a printer and request verification as to whether the print settings correspond to prohibition conditions held by the printer, and when the unique prohibition processing is executed, the request processing is not executed.

## Description

The present application is based on, and claims priority from JP Application Serial Number 2025-039164, filed March 12, 2025, the disclosure of which is hereby incorporated by reference herein in its entirety.

### BACKGROUND

### 1. Technical Field

The present disclosure relates to an information processing apparatus and an information processing method.

### 2. Related Art

In the print settings of a printer, a user can set values of setting items such as the number of copies, print orientation, and size of the print medium. However, there may be a setting value that cannot be applied as a value of a setting item. Hereinafter, the condition of the setting value that cannot be applied is referred to as a prohibition condition. Further, a state where the setting value corresponds to the prohibition condition is referred to as a prohibition state. The prohibition condition includes an inter-setting-item prohibition condition which is a condition of a combination of setting values that cannot coexist among setting values of a plurality of setting items, and a single-item prohibition condition which is a condition of a setting value that cannot be applied to one setting item. Regarding the single-item prohibition condition, for example, when the password for password printing that requests a password at the time of printing is set as a setting item, when only numbers are allowed as the setting value of the password, characters other than numbers correspond to the single-item prohibition condition. JP-A-2022-6665 discloses a technique for solving a prohibition relationship between a print setting A and a print setting B.

In recent years, there is a case where a printer is controlled by a standard print program that is incorporated in an operating system (OS) without using a print driver designed for an individual printer. In this case, a print setting screen displayed by a general-purpose driver such as a standard print program may not display the setting items for all the functions of the printer. In addition, the general-purpose driver may not be able to acquire a part of the prohibition condition of the printer. In such a case, only the minimum function can be used as a function of resolving the prohibition state. As described above, there is room for improvement in the function related to the prohibition using the general-purpose driver.

### SUMMARY

According to an aspect of the present disclosure, there is provided an information processing apparatus configured to execute a standard print program and a control program that extends the standard print program, in which, in response to an input from a user, by the control program, unique prohibition processing to resolve a prohibition state of print settings is executed based on unique prohibition information, when the unique prohibition processing is not executed, by the standard print program, request processing is executed to transmit the print settings to a printer and request verification as to whether the print settings correspond to prohibition conditions held by the printer, and when the unique prohibition processing is executed, the request processing is not executed.

According to another aspect of the present disclosure, there is provided an information processing method, which is a method for executing an information processing apparatus configured to execute a standard print program and a control program that extends the standard print program, in which, in response to an input from a user, by the control program, unique prohibition processing to resolve a prohibition state of print settings is executed based on unique prohibition information, when the unique prohibition processing is not executed, by the standard print program, request processing is executed to transmit the print settings to a printer and request verification as to whether the print settings correspond to prohibition conditions held by the printer, and when the unique prohibition processing is executed, the request processing is not executed.

### BRIEF DESCRIPTION OF THE DRAWINGS

FIG. 1 is a block diagram illustrating a configuration of a printing system.
FIG. 2 is a block diagram illustrating a configuration of an information processing apparatus.
FIG. 3 is a diagram illustrating an example of a standard screen.
FIG. 4 is a diagram illustrating an example of a detail setting screen.
FIG. 5 is a diagram illustrating another example of the detail setting screen.
FIG. 6 is a diagram illustrating another example of the detail setting screen.
FIG. 7 is a sequence diagram illustrating a printing procedure when unique prohibition processing is not executed.
FIG. 8 is a sequence diagram illustrating a printing procedure when unique prohibition processing is executed.

### DESCRIPTION OF EMBODIMENTS

Here, the embodiments of the present disclosure will be described in the following order:
1. Configuration of Printing System;
2. Configuration of Printer;
3. Configuration of Information Processing Apparatus;
4. Printing Processing; and
5. Other Embodiments.

### 1. Configuration of Printing System

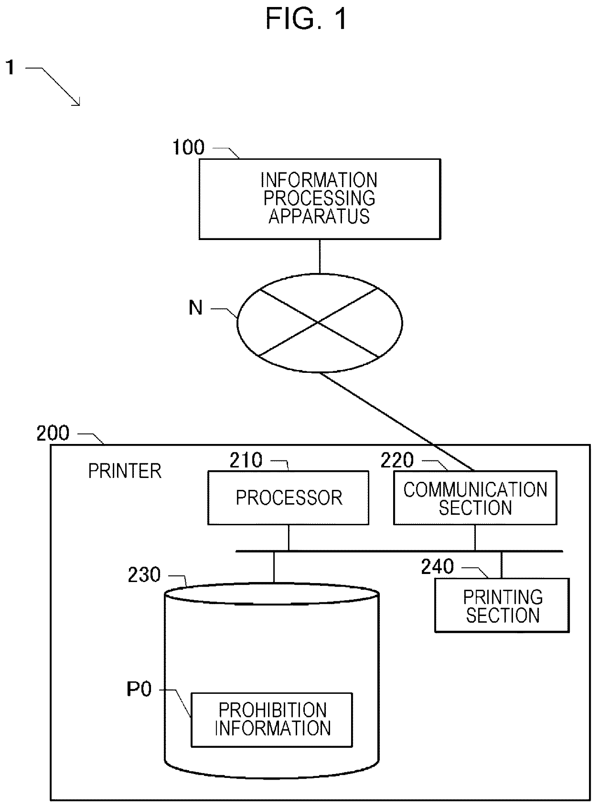

FIG. 1 illustrates a configuration of a printing system according to the present disclosure. A printing system 1 of FIG. 1 includes an information processing apparatus 100 and a printer 200. The information processing apparatus 100 and the printer 200 are coupled to be able to communicate with each other via a network N such as a Local Area Network (LAN). In the printing system 1, the printer 200 executes printing based on the print job from the information processing apparatus 100. The network N may be a wireless network or a wired network. Further, a plurality of information processing apparatuses 100 or a plurality of printers 200 may be coupled to the network N.

### 2. Configuration of Printer

The printer 200 is a printing apparatus that executes printing on a sheet-shaped print medium such as paper. The printer 200 is configured to be able to perform the communication according to the Internet Printing Protocol (IPP). The printer 200 may be configured to be able to perform the communication according to a standard other than the IPP in addition to the IPP. The printer 200 includes a processor 210, a communication section 220, a storage medium 230, and a printing section 240.

The processor 210 controls the printer 200 by executing various programs stored in the storage medium 230. The processor 210 may be configured by a single chip or a plurality of chips. In the present embodiment, the processor 210 is assumed to be a CPU, but may be configured by an ASIC or the like, or may be configured by a CPU and an ASIC.

The communication section 220 includes a circuit used for communication according to various wired or wireless communication protocols with an external device such as the information processing apparatus 100. The communication section 220 is configured to be able to perform the communication according to the IPP with an external device such as the information processing apparatus 100.

The storage medium 230 is a non-volatile memory that stores a program and data readable by the processor 210 which is a computer in a non-temporary manner. The storage medium 230 stores prohibition information P0. The prohibition information P0 is information indicating a prohibition condition, which is a condition of a setting value of a print setting item restricted in the printer 200. The prohibition information P0 includes information on all the prohibition conditions restricted in the printer. That is, the prohibition information P0 is information on a list of a plurality of prohibition conditions. The prohibition condition indicated in the prohibition information P0 may be the above-described inter-setting-item prohibition condition or may be a single-item prohibition condition. The inter-setting-item prohibition condition may be an inter-two-setting-item prohibition condition, which is a prohibition condition between two setting items, or may be an inter-multiple-setting-item prohibition condition, which is a prohibition condition between three or more setting items. As an example of the inter-two-setting-item prohibition condition, for example, a combination of "thick paper" which is a setting value of the type of print medium and "double-sided" which is a setting value of the print surface in a case of "thick paper cannot be printed on both sides" can be given. A priority level may be set between the setting values that correspond to the inter-setting-item prohibition condition. In this case, when the plurality of setting values are in a prohibition relationship, the setting value having a lower priority level is changed.

The printing section 240 is a part that executes printing on a print medium transported by a transport mechanism (not illustrated) included in the printer 200. Various printing methods such as an ink jet method and an electrophotographic method may be adopted in the printing section 240. The printing section 240 includes an actuator, various devices, a sensor, a drive circuit, a mechanical part, and the like for executing printing on a print medium.

### 3. Configuration of Information Processing Apparatus

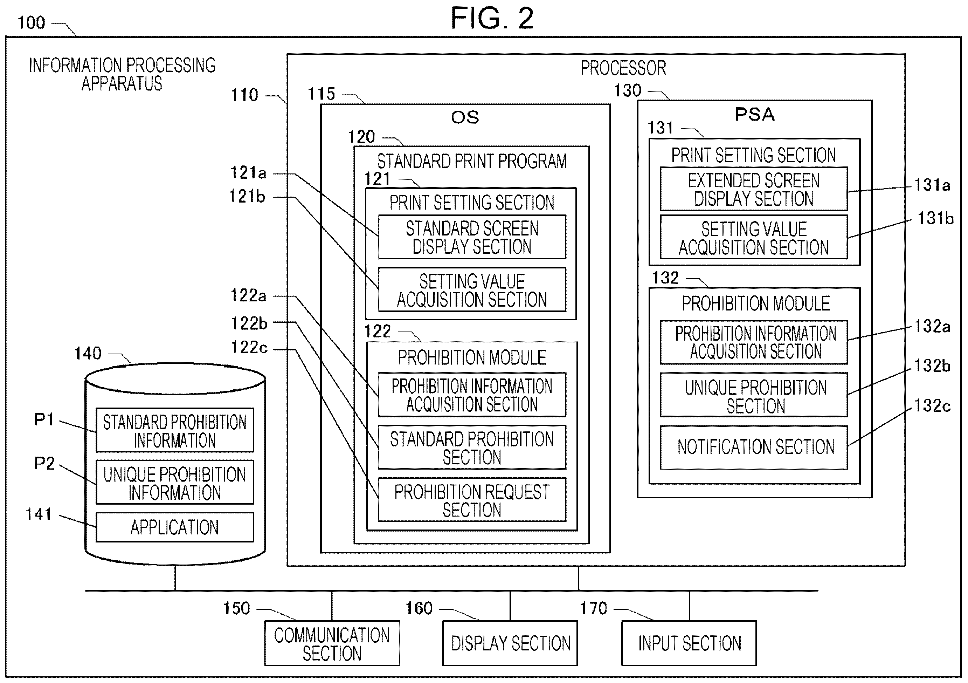

The information processing apparatus 100 is a terminal used by a user who uses the printer 200. Further, the information processing apparatus 100 is a print control apparatus that controls printing of the printer 200. The information processing apparatus 100 may be a stationary terminal or a portable terminal such as a smartphone carried by a user. As illustrated in FIG. 2, the information processing apparatus 100 includes a processor 110, a storage medium 140, a communication section 150, a display section 160, and an input section 170.

The processor 110 controls the information processing apparatus 100 by executing various programs stored in a ROM (not illustrated), the storage medium 140, or the like. The processor 110 may be configured by a single chip or may be configured by a plurality of chips. In the present embodiment, the processor 110 is assumed to be a CPU, but may be configured by an ASIC or the like, or may be configured by a CPU and an ASIC.

The processor 110 manages the basic functions of the information processing apparatus 100 by executing an operating system 115 (hereinafter referred to as "OS") stored in a ROM (not illustrated), the storage medium 140, or the like. The OS 115 is software that controls the operation of a computer, such as performing management of each resource such as hardware and providing an interface to a user or an application program. The OS 115 is, for example, Windows (registered trademark), Linux (registered trademark), macOS (registered trademark), iOS (registered trademark), Android (registered trademark), and the like.

The OS 115 includes a standard print program 120 as a general-purpose driver commonly used between different types of printers. The standard print program 120 is an OS standard program provided with the OS 115, and has a function of printing the print target data by the printer 200 or the like. The standard print program 120 has a function of causing a computer such as the processor 110 to transmit information on a print job including the print target data and the print condition according to the IPP to the printer 200 or the like. The standard print program 120 supports functions that can be commonly used by various printers provided by each vendor. The standard print program 120 does not correspond to all the functions that are unique to various printers, unlike the printer driver that is unique to various printers. That is, the functions supported by the standard print program 120 are limited to general functions.

The processor 110 functions as a print setting section 121 and a prohibition module 122 by executing the standard print program 120. The print setting section 121 is a function of the processor 110 that causes the user to set a value of each item indicating the print function and acquires the setting value. Specifically, the print setting section 121 includes a standard screen display section 121a and a setting value acquisition section 121b. The standard screen display section 121a is a function of the processor 110 that causes the display section 160 to execute standard screen display processing of displaying a standard screen, which is a standard print setting screen. When a print request is input from the input section 170, for example, via an application 141 as an application program that executes processing such as editing and display of the print target data, the processor 110 displays the standard screen. The standard screen may include a plurality of screens. The setting value acquisition section 121b is a function of the processor 110 that acquires the setting value of each print setting item set on the standard screen.

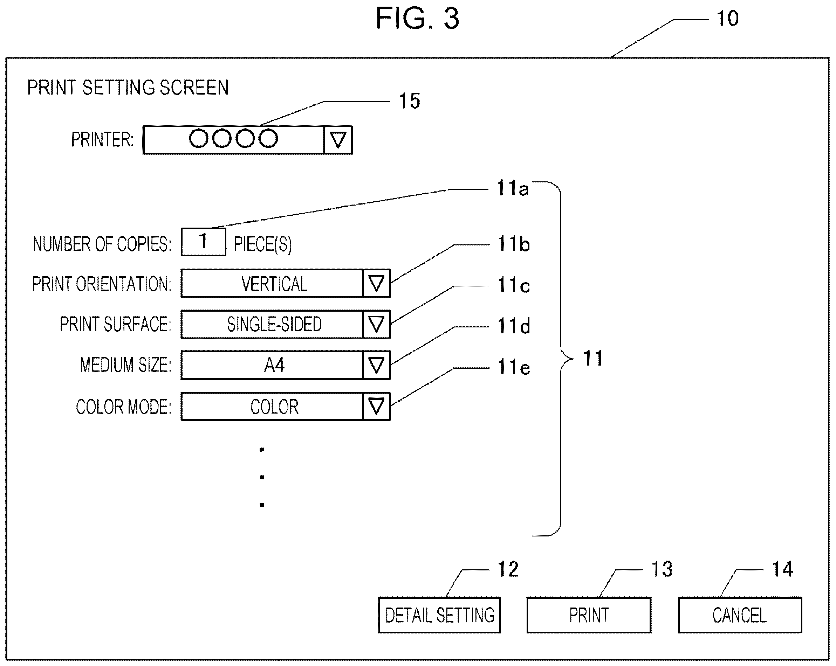

FIG. 3 illustrates a standard screen. The standard screen 10 of FIG. 3 includes a plurality of setting items 11, a detail setting button 12, a print button 13, a cancel button 14, and a printer selection field 15. The standard screen 10 includes, for example, a copy number item 11a, a print orientation item 11b, a print surface item 11c, a size item 11d, a color mode item 11e, and the like as the setting item 11. The copy number item 11a is an item for setting the number of printed copies. The print orientation item 11b is an item for setting whether printing is to be performed in the vertical direction or horizontal direction on the print medium. The print surface item 11c is an item for setting either single-sided printing or double-sided printing. The size item 11d is an item for setting the size of the print medium. The color mode item 11e is an item for setting monochrome printing or color printing. The user can input the values of the items 11a to 11e through the input section 170. A number indicating the number of copies is input to the copy number item 11a. For the items 11b to 11e, options including a plurality of values predetermined as candidates for setting values are determined, and one of the selectable values in those options is input as the setting value. Each of the items 11a to 11e is determined by an initial setting value. The initial setting value may be a value set at the time of the previous printing.

The standard screen 10 may include other setting items in addition to or instead of the above-described items 11a to 11e. The setting item 11 displayed on the standard screen 10 is, for example, a predetermined item as an item of a function that can be commonly used by various printers provided by each vendor. The processor 110 may acquire function information regarding the function of the printer 200 from the printer 200 or the like, and display the setting item corresponding to the function information on the standard screen 10 as the setting item 11.

The detail setting button 12 is a button for instructing switching to a detail print setting screen. Details of the detailed print setting screen will be described later. The print button 13 is a button for instructing the start of printing. The cancel button 14 is a button for instructing the cancellation of the print setting. When the cancel button 14 is selected, the processor 110 stops displaying the standard screen 10 and returns each setting value set on the standard screen 10 to the initial setting value. The user can select each of the buttons 12 to 14 via the input section 170. The printer selection field 15 is a field for selecting a printer that executes printing. The user can set any of the printers (including the printer 200) coupled to the information processing apparatus 100 in the printer selection field 15 via the input section 170.

The processor 110 may also switch from the standard screen 10 to another standard screen including setting items other than the setting item 11 displayed on the standard screen 10 exemplified in FIG. 3, and display the standard screen. That is, the processor 110 may display the setting item 11 by dividing the setting item 11 into a plurality of standard screens including the standard screen 10. In this case, each standard screen includes an input area such as a button for instructing switching to another standard screen, and the processor 110 switches the display to another standard screen when there is an input to the input area.

Returning to the description of FIG. 2, the prohibition module 122 is a module that causes the computer such as the processor 110 to execute processing such that each setting value set on the standard screen 10 does not enter the prohibition state. Specifically, the prohibition module 122 includes a prohibition information acquisition section 122a, a standard prohibition section 122b, and a prohibition request section 122c. The prohibition information acquisition section 122a is a function of the processor 110 that acquires prohibition information indicating prohibition conditions of the printer 200 by communicating with the printer 200. The prohibition information acquired by the function of the prohibition information acquisition section 122a is stored in the storage medium 140 as standard prohibition information P1. The standard prohibition information P1 is, for example, a part of the prohibition information P0 held by the printer 200. The standard prohibition information P1 is, for example, information indicating a common prohibition condition that can be used between various printers provided by each vendor, that is, a general prohibition condition. That is, the standard prohibition information P1 may not include information on the prohibition condition unique to the printer 200.

The standard prohibition section 122b is a function of the processor 110 that executes standard prohibition processing for resolving the prohibition state of the print setting set on the standard screen 10 based on the standard prohibition information P1. When the value of each setting item 11 displayed on the standard screen 10 is changed by the user, the processor 110 determines whether the change setting value, which is the changed setting value, corresponds to the prohibition condition (inter-setting-item prohibition condition or single-item prohibition condition) indicated in the standard prohibition information P1 by the function of the standard prohibition section 122b. When the change setting value corresponds to the prohibition condition, the processor 110 processes the change setting value or another setting value, which is in a prohibition relationship with the change setting value, to be changed to another value by the function of the standard prohibition section 122b, thereby resolving the prohibition state. The processor 110 causes the display section 160 to display a setting value corresponding to the prohibition condition by graying out or the like, and to display a message prompting the user to change the setting value to another value. The processor 110 may forcibly change the setting value corresponding to the prohibition condition to another value. Further, the processor 110 may make a setting value that corresponds to a prohibition condition unselectable by excluding the value from the options of the setting item.

The prohibition request section 122c is a function of the processor 110 illustrated below. That is, the processor 110 transmits the print setting of the print job to be executed by the printer 200 to the printer 200 according to the IPP, by the function of the prohibition request section 122c. The processor 110 executes request processing of requesting the printer 200 to verify whether the transmitted print settings do not correspond to the prohibition condition indicated by the prohibition information P0 stored in the printer 200, by using the function of the prohibition request section 122c. Note that causing the printer 200 to verify whether a print job is valid based on IPP is also referred to as IPP Validate-job. The processor 110 executes the request processing when, for example, there is an instruction to start printing from the user, that is, when the print button 13 is operated. Further, the processor 110 executes the request processing before transmitting the print target data to the printer 200, for example.

The processor 110 can execute a print support application (PSA) 130 as a control program for extending the standard print program 120. The PSA 130 is a program that executes processing based on an instruction from the OS 115 in association with the processing of the standard print program 120. The PSA 130 is a program that assists printing by the standard print program 120. The PSA 130 is a program corresponding to the model of the printer 200. The PSA 130 may be incorporated in the information processing apparatus 100 by any method, and for example, may be incorporated into the information processing apparatus 100 by being downloaded from a server (not illustrated).

The processor 110 functions as the print setting section 131 and the prohibition module 132 by executing the PSA 130. The print setting section 131 is a function of the processor 110 that causes the user to set a value of each item indicating the print function and acquires the setting value. Specifically, the print setting section 131 includes an extended screen display section 131a and a setting value acquisition section 131b. The extended screen display section 131a is a function of the processor 110 that executes extended screen display processing of displaying an extended screen, which is a print setting screen extended from the standard screen 10, on the display section 160. When there is a user input selecting the detail setting button 12 of the standard screen 10 via the input section 170, the processor 110 causes the display section 160 to display a detail setting screen as an extended screen instead of the standard screen 10. The setting value acquisition section 131b is a function of the processor 110 that acquires the setting value of each print setting item set on the detail setting screen, which is the extended screen.

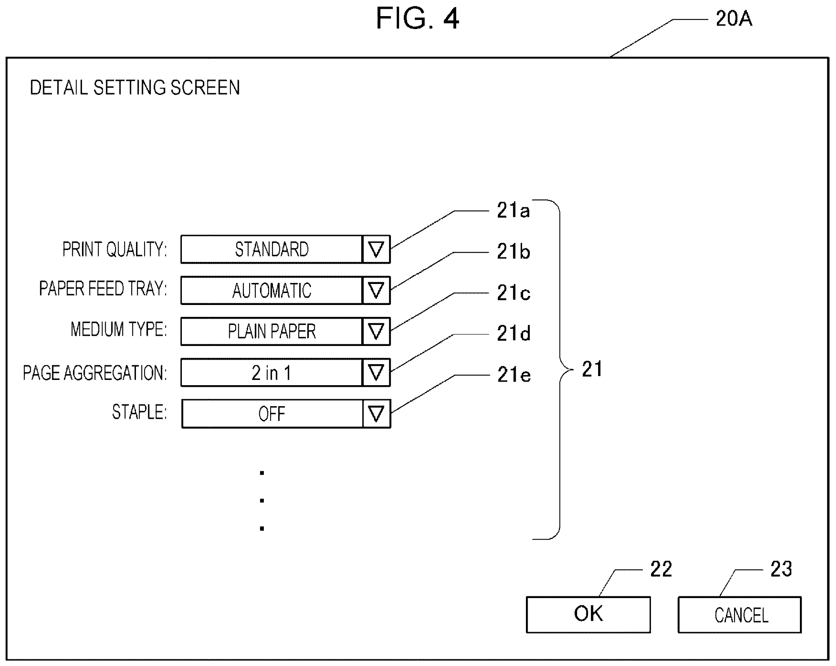

FIGS. 4 to 6 illustrate the detail setting screen. The processor 110 causes the display section 160 to display any one of the detail setting screens 20A, 20B, and 20C illustrated in FIGS. 4 to 6, for example. The detail setting screen 20A of FIG. 4 does not include the setting item 11 displayed on the standard screen 10, and includes the setting item 21 not displayed on the standard screen 10. The detail setting screen 20A includes, as the setting items 21, a print quality item 21a, a paper feed tray item 21b, a medium type item 21c, a page aggregation item 21d, a staple item 21e, and the like. The print quality item 21a is an item for setting the print quality, and is, for example, an item for setting either standard quality or high quality. When the high quality is set as the setting value of the print quality item 21a, printing is executed in which the printing resolution is increased as compared with the standard quality. The paper feed tray item 21b is an item for setting the paper feed tray used for printing among the plurality of paper feed trays. Printing is executed on the print medium stored in the paper feed tray set in the paper feed tray item 21b. The paper feed tray item 21b can also be set to "automatic" in which the paper feed tray is automatically selected.

The medium type item 21c is an item for setting the type of the print medium. Examples of the setting values that can be set in the medium type item 21c include plain paper, thick paper, and OHP film. The page aggregation item 21d is an item for setting the number of pages to be printed on one print medium. In the example of FIG. 4, since "2 in 1" is described, two pages are printed on one print medium. The staple item 21e is an item for setting whether to hold the plurality of printed print media with a staple and the position on the print medium where the staple is held when the print medium is held with the staple. The user can input the values of the items 21a to 21e through the input section 170. The items 21a to 21e are determined to include options including a plurality of values predetermined as candidates for the setting value, and any value that can be selected in the options is input as the setting value. Each of the items 21a to 21e is determined by an initial setting value. The initial setting value may be a value set at the time of the previous printing.

The detail setting screen 20A includes an OK button 22 and a cancel button 23 in addition to the setting item 21. The OK button 22 is a button that instructs to proceed with the print setting set on the detail setting screen 20A. When the OK button 22 is selected, the processor 110 enables each setting value set on the detail setting screen 20A and switches the display from the detail setting screen 20A to the standard screen 10. The cancel button 23 is a button for instructing the cancellation of the print setting on the detail setting screen 20A. When the cancel button 23 is selected, the processor 110 switches the display from the detail setting screen 20A to the standard screen 10, and returns each setting value set on the detail setting screen 20A to the initial setting value. The user can select each of the buttons 22 and 23 via the input section 170.

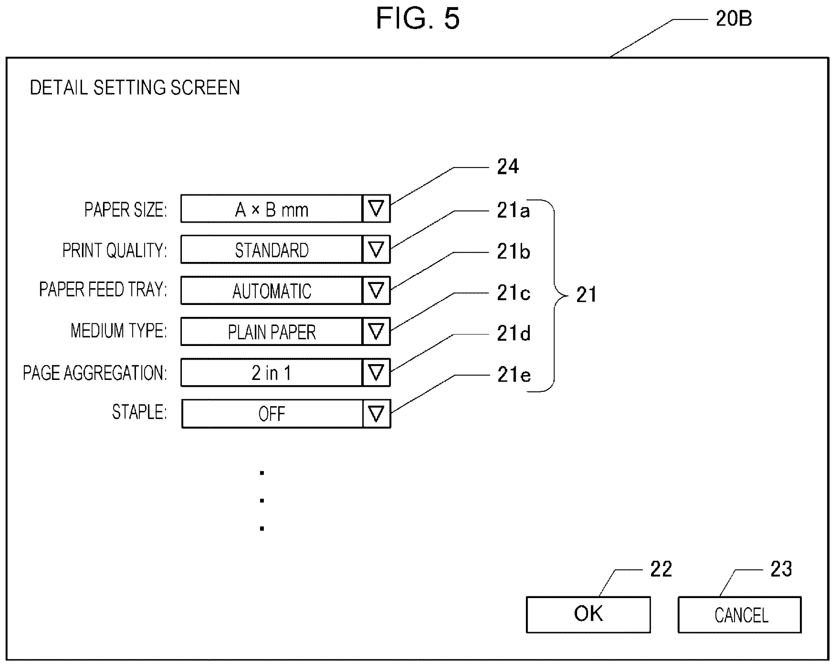

The detail setting screen 20B of FIG. 5 includes a setting item 24 in which a unique setting value that cannot be set on the standard screen 10 among the setting items 11 displayed on the standard screen 10 can be set, the setting item 21 not displayed on the standard screen 10, the OK button 22, and the cancel button 23. The detail setting screen 20B does not display the setting items that do not include the unique setting values among the setting items 11 displayed on the standard screen 10. In FIG. 5, the same components as those in FIG. 4 are given the same reference numerals, and the description thereof will be appropriately omitted. The detail setting screen 20B includes a size item for setting the size of the print medium as the setting item 24. The "A x B mm" set in the size item 24 is the size of the print medium unique to the printer 200, and is not included in the options in the size item 11d displayed on the standard screen 10. In addition to "A x B mm", the options of the size item 24 also include values that can be set in the size item 11d displayed on the standard screen 10. The setting items 11a, 11b, 11c, and 11e on the standard screen 10 are not displayed on the detail setting screen 20B. This is because the options of the setting items 11a, 11b, 11c, and 11e do not include the unique setting values unique to the printer 200. As described above, the detail setting screen 20B includes the setting item 24 that overlaps the setting item 11 of the standard screen 10, but in the overlapping setting item 24, the setting value that can be set on the standard screen 10 and the unique setting value that cannot be set on the standard screen 10 can be set.

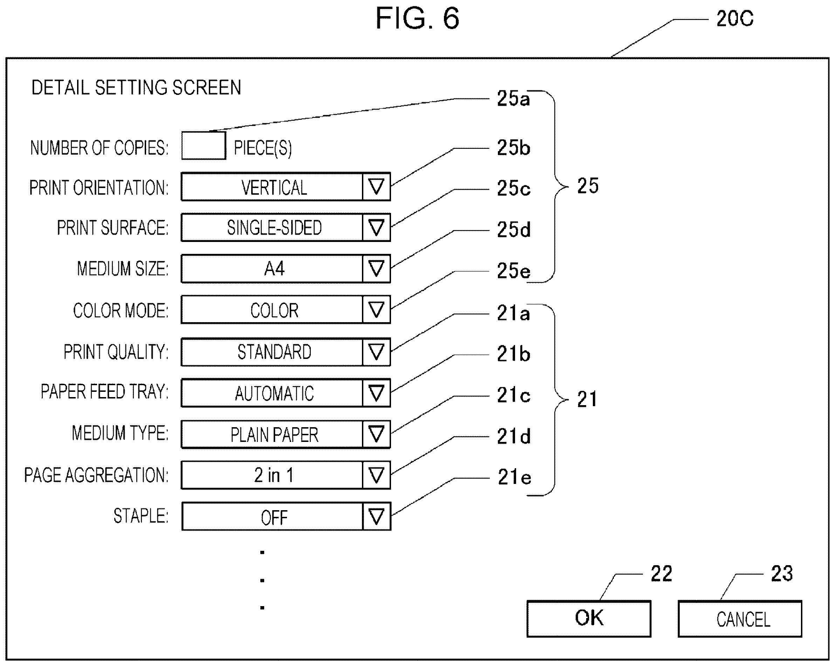

The detail setting screen 20C of FIG. 6 includes the setting items 25 and 21 of all the functions provided in the printer 200. That is, the detail setting screen 20C includes: the setting item 25 that overlaps the setting item 11 displayed on the standard screen 10; and the setting item 21 not displayed on the standard screen 10. The detail setting screen 20C includes the OK button 22 and the cancel button 23. In FIG. 6, the same components as those in FIGS. 4, 5 are given the same reference numerals, and the description thereof will be appropriately omitted. The overlapping setting item 25 may include: a setting item that does not include a unique setting value as a candidate for the setting value; and a setting item that includes the unique setting value.

The detail setting screen 20A may be divided into a plurality of screens for displaying different setting items. Similarly, the detail setting screen 20B may be divided into a plurality of screens for displaying different setting items. Similarly, the detail setting screen 20C may be divided into a plurality of screens for displaying different setting items. In this case, the detail setting screen includes an input area such as a button for instructing switching to another detail setting screen, and the processor 110 switches the display to another detail setting screen when there is an input to the input area.

Only one of the detail setting screens 20A, 20B, and 20C may be designed to be displayed. That is, for example, the detail setting screen 20A, 20B, and 20C may be designed such that only the detail setting screen 20A is displayed, may be designed such that only the detail setting screen 20B is displayed, or may be designed such that only the detail setting screen 20C is displayed. Alternatively, the display may be designed such that the display can be switched among the detail setting screens 20A, 20B, and 20C.

Further, regarding the setting items 11 that can be set on the standard screen 10 and the setting items 21 that can be set on the detail setting screen 20A, these setting items 11 and 21 are determined such that all the print functions of the printer 200 can be set. Similarly, regarding the setting items 11 that can be set on the standard screen 10 and the setting items 21 and 24 that can be set on the detail setting screen 20B, these setting items 11, 21, and 24 are determined such that all the print functions of the printer 200 can be set. The detail setting screen 20C includes all the setting items 21 and 25 of the printing function provided in the printer 200, as described above.

Returning to the description of FIG. 2, the prohibition module 132 is a module that causes the computer such as the processor 110 to execute processing such that each setting value set on the detail setting screens 20A, 20B, and 20C does not enter the prohibition state. Specifically, the prohibition module 132 includes a prohibition information acquisition section 132a, a unique prohibition section 132b, and a notification section 132c. The prohibition information acquisition section 132a is a function of the processor 110 that acquires prohibition conditions other than those included in the standard prohibition information P1, that is, unique prohibition information P2 that includes at least prohibition conditions unique to the printer 200. The unique prohibition information P2 may be information including all the prohibition conditions held by the printer 200, that is, information similar to the prohibition information P0 held by the printer 200, or may be information including prohibition conditions, which is not included in the standard prohibition information P1, and not including the prohibition conditions, which is included in the standard prohibition information P1, among the prohibition conditions included in the prohibition information P0. In any case, all the prohibition conditions are satisfied by the prohibition condition included in the standard prohibition information P1 and the prohibition condition included in the unique prohibition information P2. In the present embodiment, the unique prohibition information P2 is stored in the storage medium 140 in advance. The processor 110 acquires the unique prohibition information P2 stored in the storage medium 140 by the function of the prohibition information acquisition section 132a. The processor 110 may acquire the unique prohibition information P2 by any method.

The unique prohibition section 132b is a function of the processor 110 that executes unique prohibition processing for resolving the prohibition state of the print setting based on the unique prohibition information P2. Specifically, the processor 110 resolves the prohibition state of the print setting set on the detail setting screens 20A, 20B, and 20C based on the unique prohibition information P2 by the function of the unique prohibition section 132b. When the unique prohibition information P2 is a part of the prohibition information P0 provided in the printer 200, the processor 110 may resolve the prohibition state of the print setting set on the detail setting screens 20A, 20B, and 20C based on the standard prohibition information P1 in addition to the unique prohibition information P2. The unique prohibition processing based on the function of the unique prohibition section 132b is executed when a predetermined condition is satisfied, and is not executed when the predetermined condition is not satisfied. The predetermined condition is, for example, a condition that the display is switched from the standard screen 10 to the detail setting screens 20A, 20B, and 20C. That is, when the switching to the detail setting screens 20A, 20B, and 20C is not performed, the unique prohibition processing is not executed. Further, the switching from the standard screen 10 to the detail setting screens 20A, 20B, and 20C is performed in response to the user input via the input section 170. That is, the unique prohibition processing is executed in response to the user input.

More specifically, when the value of each print item displayed on the detail setting screens 20A, 20B, and 20C is changed by the user, the processor 110 determines whether the change setting value, which is the changed setting value, corresponds to the prohibition condition (inter-setting-item prohibition condition or single-item prohibition condition) indicated in the unique prohibition information P2 by the function of the unique prohibition section 132b. When the change setting value corresponds to the prohibition condition, the processor 110 processes the change setting value or another setting value, which is in a prohibition relationship with the change setting value, to be changed to another value by the function of the unique prohibition section 132b, thereby resolving the prohibition state. The processor 110 causes the display section 160 to display a setting value corresponding to the prohibition condition by graying out or the like, and to display a message prompting the user to change the setting value to another value. The processor 110 may forcibly change the setting value corresponding to the prohibition condition to another value. Further, the processor 110 may make a setting value that corresponds to a prohibition condition unselectable by excluding the value from the options of the setting item.

The notification section 132c is a function of the processor 110 that notifies the standard print program 120, in other words, the OS 115 that the unique prohibition processing is executed by the function of the unique prohibition section 132b.

The storage medium 140 is a non-volatile memory that stores a program and data readable by the processor 110 which is a computer in a non-temporary manner. The storage medium 140 stores various programs and various pieces of data executed by the processor 110. Specifically, the storage medium 140 stores, for example, the OS 115, the standard print program 120, the PSA 130, the standard prohibition information P1, and the unique prohibition information P2 described above. Further, the storage medium 140 stores an application 141 as an application program that executes processing such as editing and displaying of the print target data. The application 141 may be an application program that processes document data such as a pdf file, or may be an application program that processes image data such as bitmap data. In addition, the print target data (document data, image data, and the like) is stored in the storage medium 140.

The communication section 150 includes a circuit used for communication according to various wired or wireless communication protocols with an external device such as the printer 200. The communication section 150 is configured to be able to perform the communication according to IPP with an external device such as the printer 200. The display section 160 is a section that displays various pieces of information such as the print setting screens 10, 20A, 20B, and 20C. The input section 170 is an operation section such as a mouse, a keyboard, a touch pad, and a touch panel, and is a section that accepts an input from a user.

### 4. Printing Processing

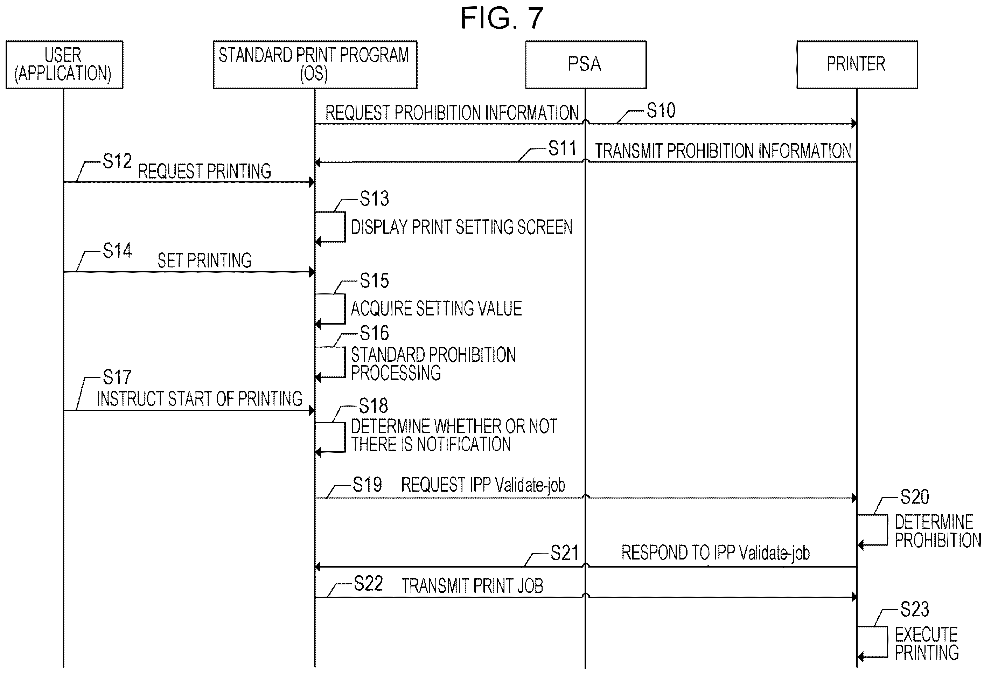

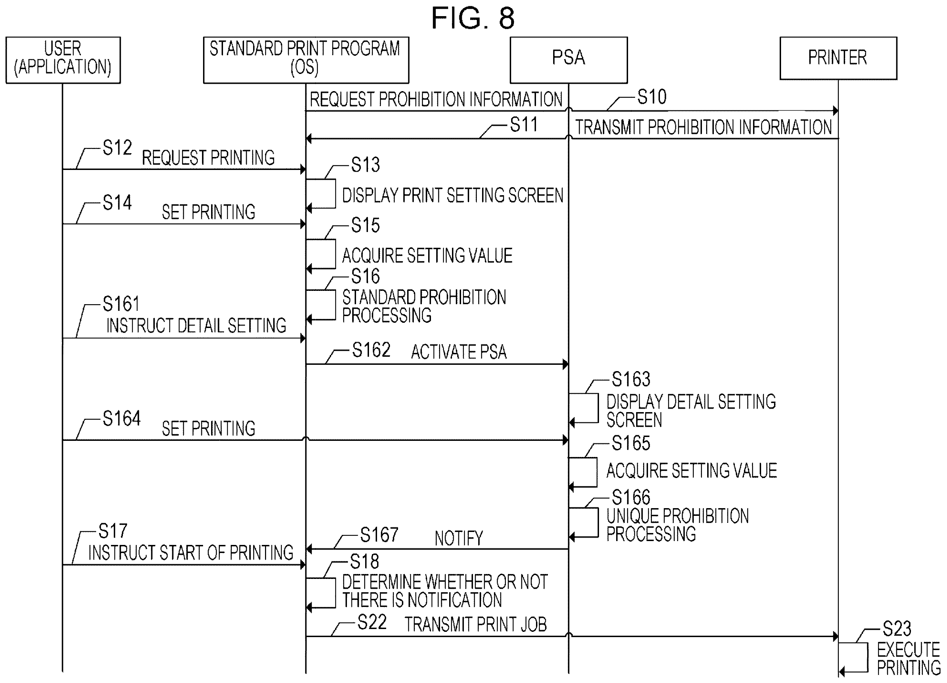

Next, printing processing executed by the printing system 1 will be described. FIG. 7 illustrates a sequence diagram of the printing procedure when the unique prohibition processing based on the function of the PSA 130 is not executed. FIG. 8 illustrates a sequence diagram of the printing procedure when the unique prohibition processing based on the function of the PSA 130 is executed. In FIGS. 7 and 8, the same processing are given the same reference numerals. First, a procedure of FIG. 7 will be described.

In FIG. 7, first, the processor 110 executes prohibition information acquisition processing of acquiring the prohibition information of the printer 200 by communicating with the printer 200, by the function of the prohibition information acquisition section 122a of the standard print program 120 (steps S10 and S11). Specifically, the processor 110 requests the printer 200 for the prohibition information held by the printer 200 via the communication section 150 (step S10). The processor 210 of the printer 200 transmits the standard prohibition information P1 described above to the information processing apparatus 100 via the communication section 220 in response to the request (step S11). The processor 110 acquires the standard prohibition information P1 from the printer 200 via the communication section 150 by the function of the standard prohibition information acquisition section 122a, and stores the acquired standard prohibition information P1 in the storage medium 140. The communication between the information processing apparatus 100 and the printer 200 in steps S10 and S11 follows the IPP. The timing at which steps S10 and S11 are executed may be any timing, but may be, for example, a timing at which the printer 200 is coupled to be able to communicate with the information processing apparatus 100. Alternatively, steps S10 and S11 may be executed at a timing when the printer 200 is set in the printer selection field 15 of the standard screen 10 after step S12 described later is executed.

The user requests printing of data such as a print target image on the screen of the application 141 via the input section 170 (step S12). The processor 110 causes the display section 160 to display the standard screen 10 by the function of the standard screen display section 121a in response to the print request (step S13).

The user sets the printer 200 in the printer selection field 15 of the standard screen 10 via the input section 170, and changes the value of the print setting item 11 from the initial setting value as necessary (step S14).

When the setting value of the setting item 11 is changed in step S14, the processor 110 acquires the setting value of each setting item 11 set on the standard screen 10 by the function of the setting value acquisition section 121b (step S15). The processor 110 executes the above-described standard prohibition processing for each acquired setting value in step S15 by the function of the standard prohibition section 122b (step S16). When the setting value is not changed by the user, step S16 may not be executed.

After performing print settings on the standard screen 10, the user instructs the start of printing by selecting the print button 13 of the standard screen 10 via the input section 170 (step S17). The processor 110 determines whether the PSA 130 notified that the unique prohibition processing was executed (step S18) in response to the instruction to start printing from the user. When there is no notification, the processor 110 executes the request processing (request for IPP Validate-job) according to the IPP as described above by the function of the prohibition request section 122c (step S19). That is, the processor 110 transmits the print settings of the print job to be executed to the printer 200, that is, the setting values of the respective setting items 11 set on the standard screen 10, to the printer 200 via the communication section 150. The processor 110 requests the printer 200 to verify whether each transmitted setting value corresponds to the prohibition condition indicated by the prohibition information P0 held by the printer 200.

The processor 210 of the printer 200 acquires each of the setting values of the print setting from the information processing apparatus 100 via the communication section 220. The processor 210 determines whether each of the acquired setting values does not correspond to the prohibition condition indicated by the prohibition information P0 stored in the storage medium 230 (step S20). In step S20, the processor 210 performs the determination of the prohibition assuming that the setting item of the function not displayed on the standard screen 10 is set to the initial setting value or the setting value at the time of the previous printing.

The processor 210 transmits the determination result in step S20 to the information processing apparatus 100 via the communication section 220 as a response to the IPP Validate-job (step S21). The communication in step S21 follows the IPP. Specifically, when each of the setting values of the print setting does not correspond to the prohibition condition of the prohibition information P0, the processor 210 transmits information, which indicates that the IPP Validate-job was successful, to the information processing apparatus 100. When each of the setting values of the print setting corresponds to the prohibition condition of the prohibition information P0, the processor 210 transmits information, which indicates that the IPP Validate-job failed, to the information processing apparatus 100. In this case, the processor 210 notifies the information processing apparatus 100 of the setting value that corresponds to the prohibition condition, and requests the information processing apparatus 100 to change the setting value. The processor 110 of the information processing apparatus 100 displays, on the standard screen 10, that the setting value, which corresponds to the prohibition condition, corresponds to the prohibition condition, in response to the change request, and causes the display section 160 to display a message for requesting the change of the setting value. The user changes the corresponding setting value via the input section 170 in response to the change request for the setting value displayed on the display section 160. The processor 110 may execute step S19 again when the setting value is changed after step S21. In step S21, the processor 210 may forcibly change the setting value, which corresponds to the prohibition condition, to the setting value not corresponding to the prohibition condition, and may transmit the changed setting value to the information processing apparatus 100.

For example, it is assumed that there is a prohibition condition that "thick paper cannot be printed on both sides". It is assumed that the prohibition condition that "thick paper cannot be printed on both sides" is not included in the standard prohibition information P1. In addition, it is assumed that "double-sided printing" is set on the standard screen 10. In addition, although the standard screen 10 does not display the item of the type of print medium, the type of print medium at the time of the previous printing is set to "thick paper", and it is assumed that the setting of "thick paper" is valid as the setting value of the type of print medium at the time of the present printing. In this case, in the standard prohibition processing of step S16, it is determined that the condition does not correspond to the prohibition condition, whereas in the prohibition determination of step S20, it is determined that the condition does correspond to the prohibition condition.

After receiving the response in step S21, the processor 110 finally transmits a print job, which includes the print target data and the print condition, to the printer 200 via the communication section 150 by the function of the standard print program 120 in response to the fact that it is confirmed that each of the setting values of the print setting item does not correspond to the prohibition condition (step S22). The communication in step S22 follows the IPP. The processor 110 converts the print target data into print data suitable for printing by the printer 200 in accordance with the print condition corresponding to the setting value of the print setting item by the function of the standard print program 120 before transmitting the print job to the printer 200. Specifically, the processor 110 enlarges or reduces the image indicated by the print target data based on the print resolution indicated in the print condition, for example. The processor 110 converts the image data after the enlargement or the reduction into gradation data for each color of the ink used in the printer 200. The processor 110 performs halftone processing based on the gradation data, and determines the color and the amount of ink to be discharged to each pixel. The processor 110 generates data indicating the color and the amount of ink for each pixel of the print medium as the print data. The processor 110 transmits the print job including the generated print data to the printer 200. The conversion from the print target original data to the print data may be executed by the processor 210 of the printer 200.

The processor 210 receives a print job from the information processing apparatus 100 via the communication section 220. The processor 210 causes the printing section 240 to execute printing on the print medium based on the print data included in the received print job (step S23).

Next, a procedure of FIG. 8 will be described. In FIG. 8, the same components as those in FIG. 7 are given the same reference numerals, and the description thereof will be appropriately omitted. After step S13, the user selects the detail setting button 12 on the standard screen 10 via the input section 170 (step S161). In FIG. 8, an example in which step S161 is executed after step S16 is illustrated, but step S14 to step S16 may not be executed. The processor 110 activates the PSA 130 by the function of the standard print program 120 in response to the selection of the detail setting button 12 (step S162). Then, the processor 110 causes the display section 160 to display the detail setting screen 20A of FIG. 4, the detail setting screen 20B of FIG. 5, or the detail setting screen 20C of FIG. 6 by the function of the extended screen display section 131a (step S163).

The user changes the setting value of the setting item on the detail setting screens 20A, 20B, and 20C from the initial setting value via the input section 170 (step S164). The processor 110 acquires the setting value of each setting item set on the detail setting screens 20A, 20B, and 20C by the function of the setting value acquisition section 131b (step S165). The processor 110 executes the above-described unique prohibition processing for each of the acquired setting values in step S165 by the function of the unique prohibition section 132b (step S166). The processor 110 notifies the standard print program 120 that the unique prohibition processing is executed by the function of the notification section 132c (step S167).

The user switches the display of the display section 160 to the standard screen 10 by selecting the OK button 22 on the detail setting screens 20A, 20B, and 20C via the input section 170 after the print settings on the detail setting screens 20A, 20B, and 20C. Thereafter, the user instructs the start of printing by selecting the print button 13 on the standard screen 10 via the input section 170 (step S17).

In response to the print start instruction from the user, the processor 110 determines whether there is a notification from the PSA 130 indicating that the unique prohibition processing was executed, that is, the notification of step S167 (step S18). In the example of FIG. 8, since this notification is present, the processor 110 transmits the print job to the printer 200 via the communication section 150 by the function of the standard print program 120 (step S22). That is, the processor 110 transmits the print job to the printer 200 without executing the request for the IPP Validate-job to the printer 200. The processor 210 executes printing based on the print job from the information processing apparatus 100 (step S23). In the case of FIG. 8, the processing of transmitting the print job from the information processing apparatus 100 to the printer 200, that is, step S22 may be executed by the function of the PSA 130. In this case, the communication between the information processing apparatus 100 and the printer 200 may be performed according to the IPP, or may be performed according to a communication standard other than the IPP.

Hereinafter, the effect of the present embodiment will be described. According to the present embodiment, since the information processing apparatus 100 can execute the unique prohibition processing based on the function of the PSA 130, it can be determined whether the setting value of the print setting item corresponds to the prohibition condition unique to the printer 200, which cannot be determined by the standard print program 120 alone. Further, when the unique prohibition processing is executed, the information processing apparatus 100 does not execute the request processing in step S19. Therefore, the time from the instruction of the print start in step S17 to the completion of the print execution on the print medium in step S22 can be shortened. Further, when the unique prohibition processing is not executed, the information processing apparatus 100 executes the request processing in step S19 before the print job is transmitted. Therefore, the execution of printing in the print setting that corresponds to the prohibition condition of the printer 200 can be avoided.

Further, when the detail setting screen 20A of FIG. 4 is displayed as the extended screen, the detail setting screen 20A does not include the setting item 11 displayed on the standard screen 10, and thus the number of setting items 21 displayed on the detail setting screen 20A can be reduced. That is, the complication of the display of the detail setting screen 20A can be suppressed.

In addition, when the detail setting screen 20B of FIG. 5 is displayed as the extended screen, the detail setting screen 20B includes the setting item 24, in which a unique setting value that cannot be set on the standard screen 10 can be set, among the setting items 11 displayed on the standard screen 10, and thus the user can set the setting value unique to the printer 200 via the detail setting screen 20B. Further, since the detail setting screen 20B does not display the setting items, which do not include the unique setting value, among the setting items 11 displayed on the standard screen 10, the complication of the display of the detail setting screen 20B can be suppressed.

In addition, when the detail setting screen 20C of FIG. 6 is displayed as the extended screen, the detail setting screen 20C includes the setting items of all the functions provided in the printer 200. Therefore, the user can set the values of more setting items via the detail setting screen 20C.

Since the control program for extending the standard print program 120 which is a general-purpose driver is the PSA 130, the PSA 130 can assist the printing by the standard print program 120.

### 5. Other Embodiments

The above embodiment is an example, and various other embodiments can be adopted. For example, in the above-described embodiment, the standard print program 120 incorporated as a standard in the OS 115 is illustrated as the general-purpose driver. However, the present disclosure is not limited thereto, and the general-purpose driver may be a print driver other than the standard print program included in the OS. For example, when printing a screen of a browser that browses a Web site, a driver provided by a vendor of the browser may be used as a general-purpose driver. Further, the control program for extending the general-purpose driver may be a program other than the PSA. In the above embodiment, an example is illustrated in which the information processing apparatus acquires the standard prohibition information from the printer and executes the standard prohibition processing based on the standard prohibition information, by using the general-purpose driver. However, the present disclosure is not limited thereto, and the information processing apparatus may not acquire the standard prohibition information or execute the standard prohibition processing.

In the prohibition information acquisition processing based on the general-purpose driver, the prohibition information of the printer may be acquired by communicating with the printer. For example, the standard prohibition information P1 acquired in step S11 may be information including all the prohibition conditions indicated in the prohibition information P0 held by the printer 200.

In the standard prohibition processing based on the general-purpose driver, the prohibition state of the print setting to be set on the print setting screen may be resolved based on the prohibition information acquired from the printer by the prohibition information acquisition processing. In the unique prohibition processing based on the control program for extending the general-purpose driver, the prohibition state of the print setting may be resolved based on the unique prohibition information held by the control program. The method of resolving the prohibition state in the standard prohibition processing and the unique prohibition processing may be any method.

Each section configuring the information processing apparatus 100 may be present, being divided into a plurality of apparatuses. In addition, each functional section realized by the processor 110 may be realized by being divided into a plurality of apparatuses or a plurality of processors.

In addition, the method of the present disclosure can also be applied as a program or a method. The system, the program, or the method as described above may be achieved as a single apparatus, may be achieved by using components provided by a plurality of apparatuses, and includes various aspects. Further, a part of the system, the program, or the method can be changed as appropriate, and a part thereof is software and a part thereof is hardware. Further, the disclosure is also established as a recording medium for a program that controls a system. It is needless to say that the recording medium of the program may be a magnetic recording medium or a semiconductor memory, and any recording medium developed in the future can be considered in exactly the same way.

## Claims

1. An information processing apparatus configured to execute a general-purpose driver and a control program that extends the standard print program, wherein,
in response to an input from a user, by the control program, unique prohibition processing to resolve a prohibition state of print settings is executed based on unique prohibition information,
when the unique prohibition processing is not executed, by the standard print program, request processing is executed to transmit the print settings to a printer and request verification as to whether the print settings correspond to prohibition conditions held by the printer, and
when the unique prohibition processing is executed, the request processing is not executed.

2. The information processing apparatus according to claim 1, wherein
in response to an input from the user, by the control program, extended screen display processing to display an extended screen as a print setting screen is executed,
in the unique prohibition processing, a prohibition state of print settings set on the extended screen is resolved, and
in the extended screen display processing, setting items displayed on a standard screen, which is a print setting screen by the standard print program, are not displayed on the extended screen, and setting items, which are not displayed on the standard screen, are displayed on the extended screen.

3. The information processing apparatus according to claim 1, wherein,
in response to an input from the user, by the control program, extended screen display processing to display an extended screen as a print setting screen is executed,
in the unique prohibition processing, a prohibition state of print settings set on the extended screen is resolved, and
in the extended screen display processing, among setting items displayed on a standard screen, which is a print setting screen, by the standard print program, the setting items that are able to set unique setting values unsettable on the standard screen, and setting items that are not displayed on the standard screen, are displayed on the extended screen, and setting items that do not include the unique setting values among the setting items displayed on the standard screen are not displayed on the extended screen.

4. The information processing apparatus according to claim 1, wherein,
in response to an input from the user, by the control program, extended screen display processing to display an extended screen as a print setting screen is executed,
in the unique prohibition processing, a prohibition state of print settings set on the extended screen is resolved, and
in the extended screen display processing, all setting items are displayed on the extended screen.

5. The information processing apparatus according to claim 1, wherein
the control program is a Print Support Application.

6. An information processing method, which is a method for executing an information processing apparatus configured to execute a standard print program and a control program that extends the standard print program, wherein,
in response to an input from a user, by the control program, unique prohibition processing to resolve a prohibition state of print settings is executed based on unique prohibition information,
when the unique prohibition processing is not executed, by the standard print program, request processing is executed to transmit the print settings to a printer and request verification as to whether the print settings correspond to prohibition conditions held by the printer, and
when the unique prohibition processing is executed, the request processing is not executed.
